# NOUVEAU FASCICULE DE BREVET EUROPEEN

(11) **EP 0 539 534 B2**
(45) Date de publication et mention de la décision concernant l'opposition: **08.03.2006**
(45) Mention de la délivrance du brevet: 16.09.1998
(21) Numéro de dépôt: 92907183.5
(22) Date de dépôt: 08.04.1992
(51) Int. Cl.: B29B 7/28, B29B 17/00

(54) **PROCEDE POUR TRANSFORMER UNE MATIERE PREMIERE CONTENANT AU MOINS DEUX MATIERES THERMOPLASTIQUES DIFFERENTES EN UNE NOUVELLE MATIERE THERMOPLASTIQUE HOMOGENE**
VERFAHREN ZUM TRANSFORMIEREN EINES ROHMATERIALS, DAS WENIGSTENS ZWEI VERSCHIEDENE THERMOPLASTISCHE KUNSTSTOFFE ENTHÄLT, ZU EINEM NEUEN THERMOPLASTISCHEN HOMOGENEN KUNSTSTOFF
METHOD FOR TRANSFORMING A RAW MATERIAL CONTAINING AT LEAST TWO DIFFERENT THERMOPLASTIC MATERIALS INTO A NOVEL HOMOGENEOUS THERMOSPLATIC MATERIAL

(30) Priorité: 16.04.1991 IT TO910288
(43) Date de publication de la demande: 05.05.1993
(73) Titulaire: Bami Intelligence S.A., Nueva Urbanizacion Obarrio, Panama City (PA)
(72) Inventeur: MARIANI, Giordano, I-20162 Milan (IT); MARIANI, Cinzia, Licia, I-20162 Milan (IT)
(74) Mandataire: Kügele, Bernhard
(86) Numéro de dépôt international: PCT/CH1992/000064
(87) Numéro de publication internationale: WO 1992/018310

(56) Documents cités:
- FR-A- 1 262 631
- SOVIET INVENTIONS ILLUSTRATED Week 8449, 23 Mai 1985 Derwent Publications Ltd., London, GB; & SU,A,1 087 344 (MASENKO) 23 April 1984, see abstract
- Polymer Recycling, vol. 2, n. 1, 1996, pp. 3-8
- Polymer Engineering and Science, mid-December 1991, vol. 31, n. 23, pp. 1670-1673
- Antec 90, Conference Proceedings (Society of Plastics Engineers), p. 951 & divulgation orale correspondantes effectuée entre le 7 et le 11 mai 1990
- Polymer Engeneering and Science, mid-May 1990, vol. 30, n. 9, pp. 511-518
- Journal of Vinyl Technology, Sept. 1980, vol. 2, n.3, pp. 165-168
- Brabender OHG Duisburg, feuillet technique n. 2161 E, 1988 : Data processing Plasti-Corder PL 2000
- Polymer Mixing and Extrusion Technology, N.C. Cheremisinoff, M. Dekker, Inc. 1987, pp. 420-429
- Journal of Vinyl Technology, March 1987, vol. 9. n.1, pp. 28-34
- Polycarbonate/Phenoxy Blends : Physical Behaviour and Development of Interchange Reactions in Melt-Processing Conditions, Mondragon et al, Polymer Engineering and Science, November 1986, vol. 26, n. 21, pp. 1478-1482
- Polystyrene-Polyethylene Melt Blends Obtained through Reactive Mixing Process, Baker et al, Polymer Engineering and Science, November 1987, vol. 27, n. 20, pp. 1634-1641
- Effects of mixing time and blend composition on properties and morphologies of polyamide 6/polycarbonate blends, Gattiglia et al, Polymer Bulletin 21, 1989, pp. 47-52

## Description

La présente invention concerne un procédé pour le traitement de déchets matières plastiques renfermant au moins deux polymères ou copolymères thermoplastiques différents, selon lequel on soumet lesdits polymères ou copolymères, à l'état divisé, à une agitation et un brassage.

L'invention a notamment pour but de permettre l'obtention d'une nouvelle matière thermoplastique, apte à être utilisée de la même manière et dans les mêmes domaines d'application industrielle que les polymères thermoplastiques connus, à partir d'au moins deux matières thermoplastiques de natures chimiques différentes.

L'invention vise le recyclage de polymères ou copolymères thermoplastiques, sans séparation préalable de tels polymères ou copolymères selon leur nature chimique.

Comme on le sait, il est souhaitable de réutiliser les déchets de matière plastique, tels que ceux qui proviennent de la mise au rebut d'articles ou de matériaux d'emballage mélangés à des résidus alimentaires, dans les ordures ménagères, afin d'éviter, ou tout au moins de réduire, l'accumulation de ces déchets dans la nature, et également pour ralentir l'épuisement des sources de matières premières non renouvelables, notamment le pétrole, entrant dans la fabrication des matières plastiques.

Conformément à certaines techniques actuelles, le recyclage des polymères thermoplastiques nécessite la récupération et la réutilisation séparées des matières plastiques de natures chimiques différentes, étant donné que celles-ci ne sont généralement pas miscibles entre elles et que, lorsque l'on essaie de réutiliser des mélanges de particules solides de polymères thermoplastiques différents en employant les mêmes machines et les mêmes modes opératoires que ceux utilisés dans le cas d'un seul polymère thermoplastique, on obtient des articles constitués d'une matière hétérogène, dont les caractéristiques mécaniques, physiques et chimiques, telles que le module d'élasticité, les valeurs de résistance à la traction, à la flexion, à la pression, la résistance à l'attaque chimique par diverses substances liquides ou gazeuses, etc., ne sont pas bien déterminées.

Dans la pratique, la nécessité de récupérer et réutiliser séparément les différents polymères thermoplastiques constitue une limitation d'ordre économique qui réduit considérablement les possibilités de recyclage des déchets de matières plastiques, notamment de ceux qui sont contenus dans les ordures ménagères.

La demande de brevet EP-A-0 140 846 propose un procédé dans lequel des matières plastiques provenant de déchets sont soumises à un traitement en quatre étapes consécutives, à savoir: (1) trituration; (2) mélange à froid; (3) chauffage dans une première phase; et (4) chauffage dans une seconde phase. Les étapes (3) et (4) sont effectuées par l'intermédiaire de moyens de chauffage externes, tels que des éléments de chauffage électriques. D'autre part, il est précisé dans cette demande de brevet que l'on évite de soumettre les déchets à des tensions mécaniques significatives.

La demande de brevet EP-A-0 244 121 décrit un procédé pour mélanger une composition de polymères, utilisant utilisant la détermination de plusieurs variables de mélange telles que la température, la durée et l'énergie pour contrôler l'étape de mélange. Cependant, il ne propose et ne permet pas l'obtention d'une matière plastique nouvelle à partir de matières plastiques de nature chimique différente.

Le procédé selon la présente invention est caractérisé en ce que l'on effectue cette agitation et ce brassage sans apport d'énergie thermique extérieure avec une énergie et pendant une durée telles qu'une augmentation brusque apparaît dans l'énergie consommée par lesdits moyens d'agitation et de brassage, et en ce que l'on arrête cette agitation et ce brassage après l'apparition de cette augmentation brusque.

Le procédé est ainsi basé sur l'absorption d'énergie mécanique par les polymères ou copolymères en présence, sans nécessiter un apport d'énergie thermique extérieure et dans une seule étape de traitement. Il fait intervenir des phénomènes physico-chimiques qui conduisent, d'une manière inattendue, à la formation d'une matière plastique nouvelle par rapport aux matières de départ et ayant des propriétés souhaitables et prédéterminables.

5 Le traitement selon l'invention est avantageusement effectué dans une enceinte fermée munie de moyens mécaniques d'agitation. Avantageusement, ces moyens d'agitation coopèrent avec des moyens de mesure de l'énergie absorbée par la matière soumise audit traitement et ils comprennent au moins un organe d'agitation qui est, par exemple, constitué par un rotor muni d'une pluralité de pales.

Le, ou les, processus chimiques ou physico-chimiques qui se produisent au cours de la mise en oeuvre du procédé, en conduisant à la transformation du mélange initial de polymères thermoplastiques différents en une matière homogène, ne sont pas encore pleinement élucidés et l'invention n'est nullement limitée par la nature de ces processus, pas plus que par l'ordre dans lequel ils se déroulent, ni par leurs durées.

Il apparaît cependant que, au cours du traitement d'agitation et de brassage du mélange de polymères ou copolymères thermoplastiques, les particules solides subissent simultanément un rapide échauffement individuel, sous l'effet de leur frottement mutuel et/ou de leur frottement contre les organes d'agitation et les parois de l'enceinte de traitement, de sorte qu'elles se trouvent pratiquement toutes portées en même temps à une température comprise dans chacun de leurs domaines de ramollisement respectifs. Il semble aussi qu'il se produise une diminution de la taille moyenne des particules, à un certain stade du traitement, dans lequel au moins une partie des particules se trouve encore à l'état solide, ou bien dans lequel au moins une partie des particules est au moins partiellement liquide ou à l'état pâteux.

Quoi qu'il en soit, on constate un passage relativement brusque entre un stade dans lequel les différentes particules individuelles des polymères ou copolymères thermoplastiques du mélange de départ sont séparées les unes des autres et peuvent être observées individuellement et un stade ultérieur dans lequel il n'est plus possible de distinguer d'interfaces de séparation entre ces particules et où toute la masse a pris un aspect homogène, sous réserve de la présence éventuelle de particules de matière non miscible avec les polymères thermoplastiques.

Ces phénomènes sont tout à fait surprenants, étant donné que l'on peut être en présence de particules de polymères à point de fusion relativement bas, par exemple de polyoléfines et de particules de polymères à point de fusion relativement élevé, tels que les polyamides.

Les températures atteintes au sein du mélange de polymères ou copolymères thermoplastiques soumis au traitement selon le présent procédé sont généralement comprises dans le domaine de 150 à 300° C.

La masse homogène résultant du traitement d'agitation et de brassage est généralement obtenue sous forme d'une pâte ayant des caractéristiques rhéologiques correspondant à l'état dit "pseudoplastique".

Avantageusement, cette masse homogène pâteuse est immédiatement soumise à un traitement de granulation destiné à la mettre sous forme de granulés du type usuel appropriés à l'utilisation dans les machines de fabrication de pièces moulées ou injectées, selon les techniques industrielles connues.

A cet effet, on peut utiliser toute machine à granuler, par exemple par extrusion sous pression, de type connu. Avantageusement, également de manière connue en soi, on effectue au cours de l'opération de granulation, un filtrage de la pâte, par exemple au moyen de tamis à mailles de fils métalliques, de manière à séparer les particules de matière solide éventuellement contenues dans cette pâte. De telles particules de matière solide peuvent être constituées par des polymères thermodurcissables, par des métaux, par des matières minérales, telles que des débris de roches, du verre, etc... et, de manière générale, par toute matière non miscible avec les polymères thermoplastiques.

L'invention s'applique notamment au traitement d'une matière première renfermant au moins deux polymères ou copolymères thermoplastiques différents, à l'état divisé, et au moins une matière solide non miscible avec lesdits polymères ou copolymères thermoplastiques. On effectue alors au moins une opération de filtration du produit obtenu, de manière à en séparer les particules de matière différente de ladite matière thermoplastique homogène, dispersées dans cette dernière.

On peut mettre en oeuvre le procédé selon l'invention en continu ou de manière discontinue, c.à.d. en traitant la mélange de polymères ou copolymères thermoplastiques de départ par lois successifs.

Un dispositif pour la mise en oeuvre du procédé est caractérisé en ce qu'il comprend une enceinte munie de moyens d'agitation et de brassage; des moyens pour introduire une matière première à traiter dans cette enceinte; et des moyens pour décharger, hors de cette enceinte, le produit obtenu par traitement de cette matière première dans cette enceinte.

Avantageusement, les moyens d'agitation comprennent au moins une hélice ou un rotor muni de pales, tournant à grande vitesse, par exemple ayant une vitesse de rotation comprise entre 1000 et 2800 tours/minute.

On peut cependant utiliser tout autre moyen approprié d'agitation et/ou brassage et/ou mélange, mécanique ou non mécanique.

Conformément à une forme d'exécution particulièrement avantageuse de ce dispositif, ladite enceinte est de forme cylindrique et à axe horizontal et lesdits moyens d'agitation et de brassage sont constitués par un rotor muni d'une pluralité de pales, ce rotor étant monté coaxialement à l'axe de l'enceinte et traversant celle-ci, et étant relié à des moyens d'entraînement du rotor en rotation disposés à l'extérieur de l'enceinte.

L'invention a également pour objet l'application du procédé susmentionné pour l'obtention de pièces en matière plastique, caractérisée en ce que l'on met le produit sous forme de pièces conformées venues de moulage par injection.

L'invention sera mieux comprise grâce à la description détaillée, qui va suivre, d'exemples non limitatifs de mise en oeuvre du procédé selon l'invention et d'un exemple, également non limitatif d'exécution d'un dispositif pour la mise en oeuvre de ce procédé, en se référant au dessin annexé, dans lequel:
La Fig. 1 est une vue schématique, en élévation, du dispositif;
La Fig. 2 est une vue schématique, en élévation, d'une partie du dispositif représenté à la Fig. 1;
La Fig. 3 est une vue schématique de la même partie du dispositif que la Fig. 2, mais avec certains éléments et organes représentés en coupe;
La Fig. 4 est une vue schématique, en coupe, du dispositif; et
La Fig. 5 est une vue partielle schématique d'un rotor faisant partie du dispositif.

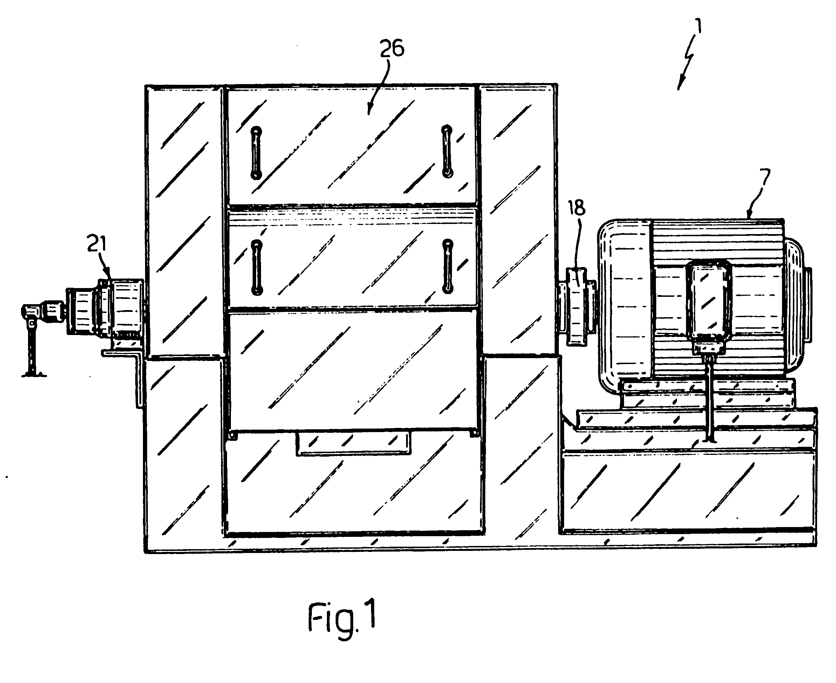

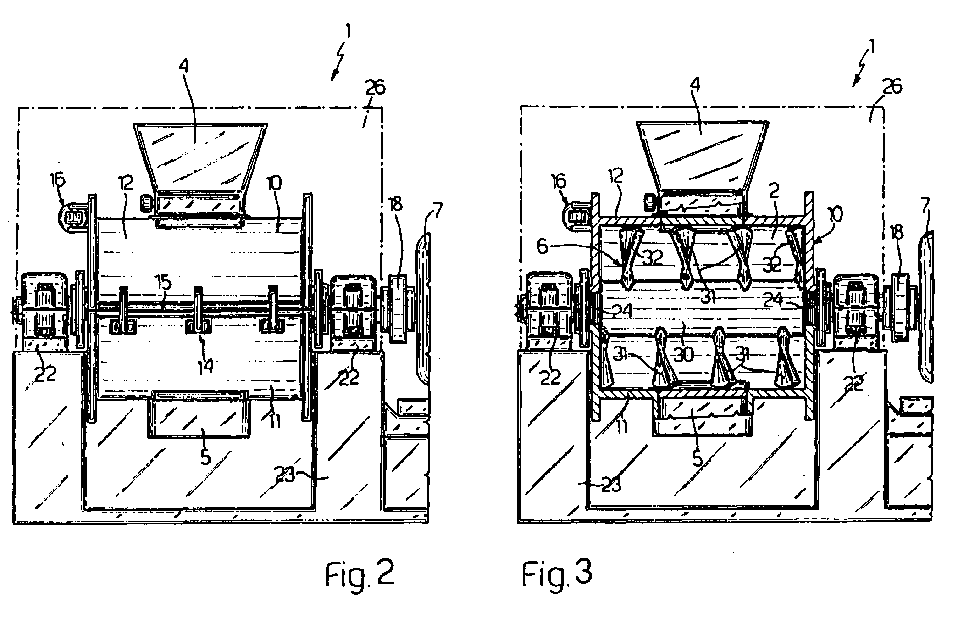

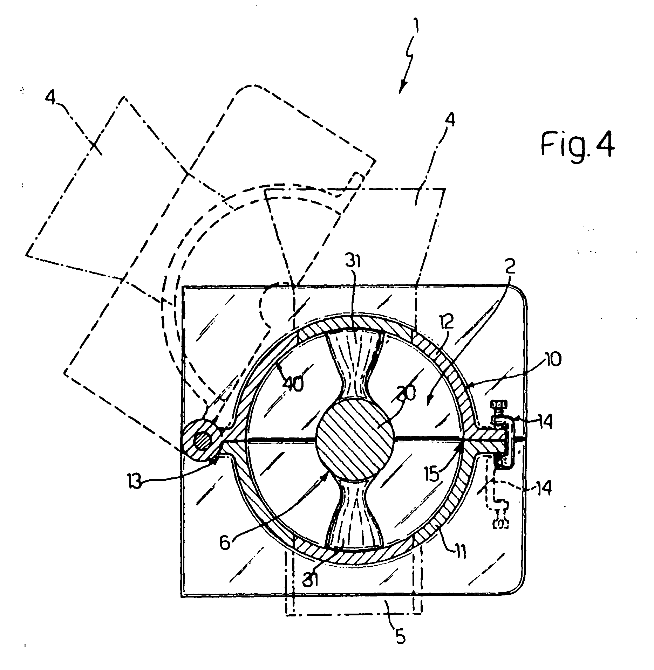

Le dispositif représenté aux Figures 1 à 5 comprend une enceinte cylindrique 2, à axe horizontal, munie d'une trémie de chargement 4 placée en position supérieure et d'un puits de déchargement 5. Un rotor 6, monté coaxialement à l'intérieur de l'enceinte 2, est actionné au moyen d'un moteur électrique 7. Les parois de l'enceinte 2 sont constituées par un ensemble 10 formé de la réunion de deux coquilles semi-cylindriques 11 et 12, assemblées entre elles au moyen d'une charnière, le long d'un bord latéral 13, et un dispositif de fermeture de sécurité 14 est disposé le long du bord 15 opposé au bord 14.

La coquille supérieure 12 est reliée à un dispositif pneumatique 16, de type connu en soi, permettant son ouverture par pivotement autour de la charnière 13. Le mouvement d'entraînement du rotor 6 par le moteur 7 est transmis au moyen d'un embrayage 18 à commande pneumatique. La rotation du rotor 6 peut être interrompue à volonté au moyen d'un dispositif de freinage 21, également à commande pneumatique.

Le rotor 6 est soutenu, à chacune de ses deux extrémités, par un palier 22, fixé sur un pilier 23. Un joint fileté 24 permet le passage étanche de chacune des extrémités de l'arbre du rotor 6 à travers la paroi de l'enceinte 2.

Un capot de protection 26 (Fig. 1) entoure la partie du dispositif comprenant l'enceinte 2 et les paliers 22 du rotor.

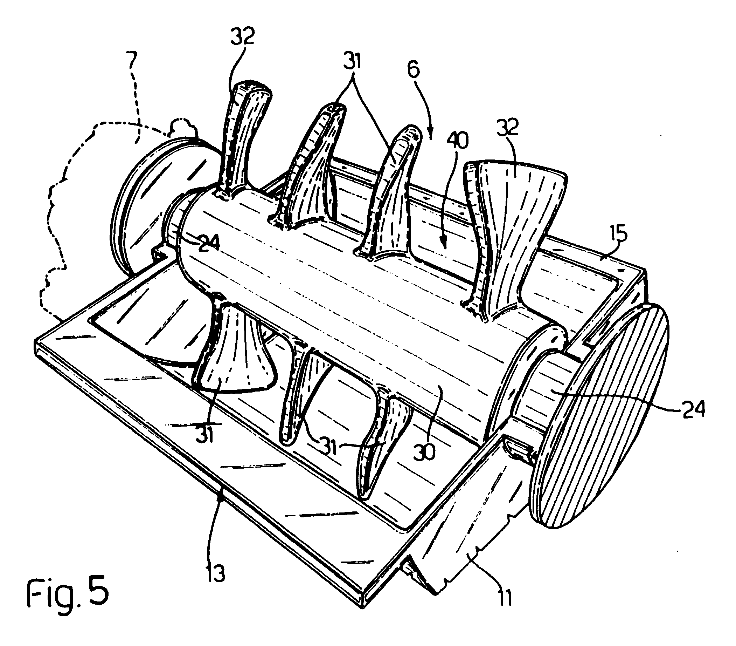

Comme on le voit le mieux à la Fig. 5, le rotor 6 est constitué par un arbre cylindrique 30 muni d'une pluralité de pales radiales 31, 32, dont les formes sont de deux types différents. Plus précisément, l'orientation des pales 32, qui sont montées au voisinage de chacune des extrémités de l'arbre 30, est telle qu'elle a pour effet de conférer à une charge de matière en cours de traitement dans l'enceinte 2 un mouvement tendant à éloigner cette matière de la paroi de l'enceinte voisine des extrémités de l'arbre 30 pour la ramener vers l'intérieur de l'enceinte, en passant à travers la région soumise à l'effet d'agitation et de brassage par les pales 31.

Avantageusement, le diamètre de l'enceinte 2 et la longueur des pales 31 et 32 sont tels que, lorsque le rotor 2 est à la température ambiante ou au voisinage de cette température, le jeu entre l'extrémité des pales 31, 32 et la paroi intérieure 40 de l'enceinte 2 soit de l'ordre de 0,5 à 1 mm.

Il s'est révélé avantageux que le dimensionnement du rotor 6 et de son moteur d'entraînement 7, par rapport au volume intérieur de l'enceinte 2, soit tel que la puissance mécanique maximale transmissible à la matière en cours de traitement dans l'enceinte 2 par le rotor 6 soit de l'ordre de 1 à 2 kW pour chaque litre de cette matière. Par exemple, pour un volume intérieur total de 85 litres de l'enceinte 2 (cas d'un prototype expérimental), on a constaté que la puissance maximale délivrée par le moteur 7 est avantageusement de l'ordre de 128 kW.

### Exemple 1 :

On utilise comme matière première un mélange de polymères thermoplastiques, sous forme de fragments de formes irrégulières, mais ayant tous des dimensions inférieures à 5 mm, provenant de la récupération de déchets de matières plastiques dans les ordures ménagères et ayant simplement subi un lavage à l'eau, suivi d'un séchage, après leur séparation des autres constituants des ordures. La composition moyenne de ce mélange est la suivante (en pourcentage pondéral):

| | |
|---|---|
| Résine ABS : | 50 |
| Chlorure de polyvinyle : | 20 |
| Polypropylène : | 15 |
| Polyéthylène: | 5 |
| Polyamide: | 5 |
| Polyméthacrylate de méthyle (PMMA) : | 5 |

On utilise, pour le traitement de ce mélange, un dispositif du genre décrit ci-dessus dans lequel l'enceinte d'agitation et brassage a un volume intérieur de 85 litres, le moteur utilisé pour l'entraînement du rotor étant un moteur électrique triphasé, à commutation de pôles, d'une puissance maximale de 140 kW, alimenté en courant à 380 Volts, 50 Herz, avec une valeur de cosinus phi de 0,85. Au bout d'une durée de rotation du rotor de l'ordre de trois minutes, on observe une brusque augmentation, immédiatement suivie par une stabilisation, de la puissance absorbée par la masse soumise à l'agitation et au brassage, qui se traduit par un pic d'intensité du courant d'alimentation du moteur, atteignant une valeur maximale de l'ordre de 270 à 280 A, au sommet du pic. La durée de la montée en intensité du courant entre la valeur initiale et le sommet du pic ainsi que celle de la chute d'intensité subséquente (jusqu'à une valeur stabilisée qui est supérieure à la valeur initiale) sont toutes deux d'environ 5 secondes. On prolonge la durée de rotation du rotor pendant environ 10 à 20 secondes après la stabilisation de l'intensité du courant d'alimentation du moteur d'entraînement du rotor, puis on arrête le rotor et on prélève immédiatement la masse homogène pâteuse, d'aspect gélifié, résultant du traitement du mélange de polymères.

On soumet cette masse soit immédiatement après son prélèvement de l'enceinte de traitement, soit après sa solidification par refroidissement, à un traitement de granulation par extrusion, dans une machine de type connu, avec filtration au moyen de tamis à mailles de fils métalliques. On obtient ainsi des granulés de matière thermoplastique d'aspect parfaitement homogène, même lorsque l'on effectue des observations à la loupe, ayant des dimensions d'environ 3 mm. Ces granulés se prêtent parfaitement à l'utilisation, dans une machine à mouler par injection industrielle, de la même matière que des granulés de résine thermoplastique ABS pure, en permettant l'obtention de pièces moulées d'excellente qualité qui présentent une parfaite isotropie de propriétés mécaniques et physiques.

### Exemple 2 :

On procède de la même manière que dans l'exemple 1, mais en utilisant, comme matière première, un mélange de polymères thermoplastiques de composition moyenne suivante (en pourcentage pondéral) :

| | |
|---|---|
| Polyéthylène (mélange à parts égales de polyéthylène haute densité et basse densité) : | 45 |
| Polystyrène : | 20 |
| Chlorure de polyvinyle : | 20 |
| Mélange à parts égales de polyester et de polyamide : | 12 |
| Polyméthacrylate de méthyle (PMMA) : | 3 |

On observe, au bout d'une durée de rotation du rotor d'environ 90 secondes, un pic d'intensité du courant d'alimentation du moteur, atteignant une valeur maximale de l'ordre de 230 A. On prolonge, comme dans l'exemple 1, la durée de rotation du rotor pendant environ 10 à 20 secondes après ce pic, avant de prélever la masse homogène pâteuse, ayant l'aspect d'un gel de consistance pseudo-plastique, résultant du traitement.

On procède ensuite à la granulation par extrusion, avec filtration de la pâte, comme dans l'exemple 1.

On obtient ainsi des granulés homogènes de matière thermoplastique qui conviennent à l'utilisation dans une machine à mouler industrielle par injection, de manière similaire à l'utilisation de granulés de résine polyéthylène haute densité pure.

II est à noter que le procédé qui vient d'être décrit se prête parfaitement à l'obtention d'une matière thermoplastique ayant des propriétés prédéterminées, intermédiaires entre celles des divers polymères et copolymères de départ, et qu'il est possible de maintenir constantes les propriétés du produit final même en cas de fluctuation de la composition moyenne des mélanges servant de matière première.

En effet, comme cela apparaîtra clairement à l'homme du métier, il suffit de procéder à l'analyse des matières premières et du produit final pour déterminer les quantités de polymères ou copolymères thermoplastiques d'un ou plusieurs type à ajouter aux mélanges de départ pour obtenir les corrections nécessaires à l'obtention d'un produit final ayant les propriétés désirées et pour maintenir ces propriétés en cas de variation de la composition des matières premières.

Bien entendu, de manière connue en soi, on peut ajouter aux mélanges de polymères et copolymères thermoplastiques toute substance ou mélanges de substances permettant d'améliorer les propriétés de la matière thermoplastique finale, par exemple des plastifiants, des agents stabilisateurs, des colorants, des charges, etc... et il est clair que grâce à la nature même des opérations du procédé, qui comporte un brassage et une agitation particulièrement efficaces, on obtient une répartition parfaitement homogène de ces substances dans le produit final.

## Revendications

1. Procédé pour le traitement de déchets de matières plastiques renfermant au moins deux polymères ou copolymères thermoplastiques différents, selon lequel on soumet lesdits polymères ou copolymères, à l'état divisé, à une agitation et un brassage par des moyens d'agitation et de brassage, **caractérisé en ce que** l'on effectue cette agitation et ce brassage sans apport d'énergie thermique extérieure avec une énergie et pendant une durée telles qu'une augmentation brusque apparaît dans l'énergie consommée par lesdits moyens d'agitation et de brassage, et **en ce que** l'on arrête cette agitation et ce brassage après l'apparition de cette augmentation brusque.

2. Procédé selon la revendication 1, **caractérisé en ce que** le traitement d'agitation et de brassage est arrêté lorsqu'une valeur sensiblement constante de l'énergie consommée est atteinte après ladite augmentation de l'énergie consommée.

3. Procédé selon l'une des revendications précédentes pour le traitement d'une matière première renfermant au moins deux polymères ou copolymères thermoplastiques différents, à l'état divisé, et au moins une matière solide non miscible avec lesdits polymères ou copolymères thermoplastiques, **caractérisé en ce que** l'on effectue au moins une opération de filtration du produit obtenu, de manière à en séparer les particules de matière différente de ladite matière thermoplastique homogène, dispersées dans cette dernière.

4. Procédé selon l'une des revendications précédentes, **caractérisé en ce que** l'on soumet le produit à un traitement de granulation.

5. Application du procédé selon la revendication 1 pour l'obtention de pièces en matière plastique, **caractérisée en ce que** l'on met le produit sous forme de pièces conformées venues de moulage par injection.

## Patentansprüche

1. Verfahren zur Behandlung von Abfällen von Plastikmaterialien, die mindestens zwei verschiedene thermoplastische Polymere oder Copolymere enthalten, bei dem man die genannten Polymere oder Copolymere in zerteiltem Zustand einer Durcheinanderbewegungs - und Rührbehandlung durch Bewegungs - und Rührmittel unterwirft, **dadurch gekennzeichnet, dass** diese Durcheinanderbewegung und dieses Rühren ohne Zufuhr von thermischer Energie von aussen mit einer solchen Energie und während einer solchen Dauer erfolgen, dass eine jähe Erhöhung in der Energie auftritt, die von den genannten Bewegungs - und Rührmitteln verbraucht wird, und dass diese Bewegung und dieses Rühren nach dem Auftreten dieser jähen Erhöhung beendet werden.

2. Verfahren nach Patentanspruch 1, **dadurch gekennzeichnet, dass** die Durcheinanderbewegungs- und Rührbehandlung beendet wird, sobald ein im wesentlichen konstanter Wert der verbrauchten Energie nach der genannten Erhöhung der verbrauchten Energie erreicht wurde.

3. Verfahren nach einem der vorhergehenden Patentansprüche zur Behandlung eines Ausgangsmaterials, welches mindestens zwei verschiedene thermoplastische Polymere oder Copolymere in zerteiltem Zustand sowie mindestens ein festes Material enthält, welches mit den genannten thermoplastischen Polymeren oder Copolymeren nicht mischbar ist, **dadurch gekennzeichnet, dass** mindestens ein Filtriervorgang an dem erhaltenen Produkt durchgeführt wird, so dass die Teilchen aus von dem genannten homogenen thermoplastischen Material verschiedenem Material von diesem thermoplastischen Material getrennt werden.

4. Verfahren nach einem der vorhergehenden Patentansprüche, **dadurch gekennzeichnet, dass** das Produkt einer Granulierungsbehandlung unterworfen wird.

5. Anwendung des Verfahrens nach Patentanspruch 1 zur Erzeugung von Teilen aus plastischem Material, **dadurch gekennzeichnet, dass** das Produkt in die Form von Teilen gebracht wird, die durch Spritzguss erhalten werden.

## Claims

1. Method for the treatment of waste plastic materials comprising at least two different thermoplastic polymers or copolymers, according to which said polymers or copolymers are subjected, in a divided state, to a treatment of agitation and stirring by agitator and stirring means, **characterized in that** this agitation and stirring is effected without adding external thermal energy with an energy and for a duration such that a rapid increase of the energy consumed by said agitator and stirring means occurs, and **in that** this agitation and stirring is stopped after the occurrence of such a rapid increase.

2. Method according to claim 1, **characterized in that** the treatment of agitating and stirring is stopped when a substantially constant value of the energy consumed is reached after said increase of the consumed energy.

3. Method according to one of the preceding claims for the treatment of a raw material comprising at least two different thermoplastic polymers or copolymers in a divided state and at least one solid material which is not miscible with said thermoplastic polymers or copolymers, **characterized in that** at least one operation of filtering of the obtained product is carried out, so as to separate therefrom the particles of material different from said homogeneous thermoplastic material which are dispersed therein.

4. Method according to one of the preceding claims, **characterized in that** the product is subjected to a granulation treatment.

5. Application of the method according to claim 1, for the obtention of parts of plastic material, **characterized in that** the product is put in the form of parts shaped by injection moulding.
